# EUROPEAN PATENT SPECIFICATION

(11) **EP 3 462 898 B1**
(45) Date of publication and mention of the grant of the patent: **29.04.2020**
(21) Application number: 17731479.6
(22) Date of filing: 01.06.2017
(51) Int. Cl.: A23D 9/007, A23D 9/013, A23D 9/04, A23G 1/30, A23G 9/24, A23G 9/32, A23G 9/48, A23D 9/00

(54) **FROZEN CONFECTION COATING COMPOSITION AND A PROCESS FOR MANUFACTURING SAME**
EISKONFEKTBESCHICHTUNGSZUSAMMENSETZUNG UND VERFAHREN ZU SEINER HERSTELLUNG
COMPOSITION D'ENROBAGE DE CONFISERIE CONGELÉE ET PROCÉDÉ DE FABRICATION DE CELLE-CI

(30) Priority: 02.06.2016 EP 16172755
(43) Date of publication of application: 10.04.2019
(73) Proprietor: Société des Produits Nestlé S.A., 1800 Vevey (CH)
(72) Inventor: CHANDRASEKARAN, Shantha, Nalur, Bakersfield CA 93311 (US); WEBERING, Christel, York North Yorkshire YO31 8FY (GB)
(74) Representative: Elleby, Gudrun
(86) International application number: PCT/EP2017/063381
(87) International publication number: WO 2017/207728

(56) References cited:
- EP-A1- 1 813 155
- EP-B1- 2 099 313
- EP-B1- 2 367 441
- WO-A1-2009/024441
- WO-A1-2015/086349
- WO-A1-2016/032392
- US-A1- 2014 178 536

## Description

### Field of the invention

The present invention relates to a composition for coating a frozen confection, in particular to a low SFA coating composition. The invention also relates to a process for manufacturing a frozen confection coating composition and a process for for coating a frozen confection.

### Background

Coated frozen confections are products which are highly appreciated by consumers. Texture, mouthfeel and nutritional profile of the coating is a driver for consumer preference.

With the increasing concern for health and wellness there is an increasing need for reducing calories, sugars, fat and saturated fats also in frozen confections.

Chocolate-like or compound coatings based on vegetable fats are commonly used for coating frozen confection. The crystallization of the fats in a coating are a key contributor to the physical properties of a coating, in particular its textural properties (brittleness, melting) and setting time. Traditionally compound coatings for frozen confection have been manufactured with high proportions of lauric fats (e.g. coconut oil and palm kernel oil) which have a saturated fatty acid (SFA) level of about 90%. With high amounts of lauric fats in the coatings, the SFA levels in the finished coating are typically between 30 and 60%, based on the fat level in the coatings.

Regarding fats the consumers are looking for products which are healthier but provide acceptable properties to the product. Solutions to this problem exist in the form of coatings blends comprising particular liquid oils which are lower in SFA and fractions of palm oil. The viscosity of these blends is important for achieving the SFA reduction because too viscous coating will result in more coating in the finished product and consequently a bigger quantity of SFA.

EP2099313 (Nestec) discloses an ice confection having an ice confection core and a snappy outer compound coating layer that has a reduced saturated fatty acid content. The fat in the compound coating is a mixture of fractionated palm oil and liquid oil. This compound coating has similar textural characteristics to that of conventional products, particularly 'snappiness'. This coating provides advantages in terms of substantial SFA reduction. However when going to lower levels of saturated fats by incorporating higher levels of liquid oil there is a tendency for the liquid oil to separate and gives an oily mouthfeel when eating a coated ice cream.

EP2367441 (Unilever) discloses a composition for coating a frozen confection is provided, the composition comprising from 63 - 70 wt.% of a fat component comprising: 70 - 92 wt.% of a palm oil fraction or blend of fractions which contains at most 8 wt.% of S3 triglycerides and has a S2U: SU2 ratio of > 2.5; 5 - 15% of a liquid oil; and 0 - 15% of cocoa butter. The terminology S and U denote the fatty acid residue in the triglycerides, wherein S is for saturated fatty acid and U stands for unsaturated fatty acids.

These characteristics refer to a combination of liquid oils and palm mid fractions, as stated in the application, namely Creamelt 900, Creamelt 700; containing >60% solids at 20°C, which are also referred to as hard palm fractions. This presents similar issues with oily mouthfeel as mentioned above. In addition the harder fraction of palm fraction causes bleeders on the line. When hard fat crystallizes, it contracts causing cracks, in addition the heat of crystallization of the fat melts the surface of the ice cream which then comes out through the crack causing bleeders.

The prior art does not show how to further substantially reduce the SFA level in a coating composition for frozen confection and without effecting the product integrity.

There is a need to have coatings for frozen confections where the physical attributes of the coating meet the requirements of the parameters, e.g. dripping and setting time, pick-up weight, plastic viscosity and yield value without impact on coating breakage or bleeding.

Furthermore, there is a need for a reduced amount SFA in a frozen confectionery coating while maintaining the properties discussed above.

### Object of the invention

It is thus the object of present invention to provide a reduced SFA coating for frozen confectionery products, said coating having physical properties acceptable for the consumers, in particular preventing oily mouthfeel.

A second object the present invention is to provide a coating composition for frozen confectionery with acceptable processing characteristics.

### Summary of the invention

The present invention allows the production of low SFA compound coatings for frozen confection which exhibits good and comparable textural properties, especially on the first bite, as traditional compound coatings containing significant amount of SFA. The low SFA fat blends developed in accordance with the current invention can achieve a SFA level from fat and oil additives that is reduced up to 50% compared to conventional coconut oil based compound coatings, and a further 20-25% reduction compared to other low SFA coatings while maintaining the initial snap properties. The coating composition according to the invention has an SFA level from fat and oil additives of less than 40% SFA by weight (based on the fat and fat containing components in the coating) compared to the about 60% by weight in the conventional coating, in regular frozen confection compound coatings. The invention furthermore allows the SFA level in the coating to be reduced as low as 18 - 20 wt.% SFA, still with satisfactory coating manufacturing, storage/handling and application of the coating.

According to a first aspect the present invention relates to frozen confection coating composition, the composition comprising,
expressed in weight % based on the total weight of the coating,
35 - 75 wt.% of non-interesterified fat, preferably 40-65 wt.% of non-interesterified fat which comprises a fat blend of medium soft fat and liquid oil, and
25 - 65 wt.% of non-fat solids, preferably 35-60 wt.% of non-fat solids,
wherein, the coating composition comprises,
   less than 30 wt.% of saturated fatty acids
   9-50 wt.%, preferably 15-30 wt.% of monounsaturated fatty acid and less than 30 wt.%, preferably less than 15 wt.% of polyunsaturated fatty acid, and
wherein the medium soft fat has 35-50 %, preferably 40-45 % of solid fat at 20°C, and the medium soft fat has less than 55 wt. % saturated fatty acids and
   wherein the liquid oil is liquid at 20°C and contains less than 5% of solid fat content at 0°C and
wherein the medium soft fat is selected from the group consisting of: palm oil medium soft fractions including soft stearins and mid fractions, shea, cocoa butter, cocoa butter equivalents, cocoa butter replacers, or a combination thereof; and
wherein the non-fat solids are selected from the group consisting of: sugar, fibres, cocoa powder, milk powder, emulsifier and one or more flavours.

It has surprisingly been found that the coating composition according to the invention can be used to coat frozen confection and it performs well on the production line. A particular preferred embodiment comprises palm fractions. The palm fraction is lower in saturated fat, ∼51%; it means less liquid oil needs to be added to get a lower SFA coating and this performs well on the line and also does not give oily mouthfeel when being consumed.

It has been found that the coating according to the invention meets the requirements of dripping and setting time, pick-up weight, plastic viscosity, yield value without impact on coating breakage or cracks.

In a second aspect the present invention relates to a process for manufacturing a coating composition as described here wherein said process comprising the steps:
providing the non-fat solids, the medium soft fat and the liquid oil,
melting the medium soft fat,
mixing non-fat solids with at least part of the melted medium soft fat and/or liquid oil and obtaining a mixture of medium soft fat/oil and non-fat solids, refining the mixture of medium soft fat and/or liquid oil and non-fat solids to reduce the particle, preferably to a particle size to below 40 microns,
adding any remaining fat/oil to the refined mixture and
optionally adding emulsifier before the refining, to the refined mixture and/or to the mixture with the remaining fat/oil.

The invention furthermore relates to a process for producing an at least partly coated frozen confection, and to an at least partly coated frozen confection with a coating as herein described.

### Brief description of the drawings

Figure 1 shows ice cream bars coated with coatings A1 and C1, Coating A1 contains hard palm fraction and liquid oil in the coating and shows more bleeders while coating C1 contains medium soft palm fraction and liquid oil and has less or no bleeders.
Figure 2 shows the oil separation in coatings A1, B1 and C1. Coating A1 and B1 use hard palm fraction and liquid oil and shows more oil separation as compared to coating C1 which contains medium soft palm fraction and liquid oil and has less oil separation.

### Detailed description of the invention

In the present context medium soft fat means that it has 35-50 %, preferably 40-45 % of solid fat content at 20°C. Furthermore, the medium soft fat has less than 55 wt. % saturated fatty acids. Lower saturated fatty acids level in the fat provides healthier options for the consumers.

In the present context a medium soft palm mid fraction is a fraction produced via two-stage fractionation of palm oil, which has 35- 50% , preferably between 40-45% of solid fat at 20°C and less than 5 % of solid fat content above 35°C.

Further in the present context liquid oil means that the oil is liquid at ambient temperature i.e. about 20 °C and contain less than 5% of solid fat content at 0°C.

In the present context the solid fat is measured using the ISO-8292-1D method.

In a preferred embodiment of the invention the coating composition saturated fatty acids comprising 12-24 C-atoms and the unsaturated fatty acid contains 16 C-atoms or more than 16 C-atoms.

In the coating composition according to the invention the composition comprises 35 - 75 wt.% of fat, which comprises a fat blend of medium soft fat and liquid oil. Below 35 wt.% of fat the coating with this composition will be very viscous (due to more solids dispersed in the fat phase in the product) and not processable whereas above 75 wt % of fat the coating will not give the consumers a pleasant eating experience.

With the coating composition according to the invention it is possible to obtain a coating which has less than 35 wt.% of SFA. Even coatings with less than 20 wt.% SFA may advantageously be made with the coating composition according to the invention. Also coatings with less than 15 wt.% of saturated fatty acids may be obtained. A preferred level of SFA in the coating composition is 20 - 25 wt.% of saturated fatty acids.

The coating composition according to the invention also comprises 9-50 wt.%, preferably 15-30 wt.% of monounsaturated fatty acid and less than 30 wt.%, preferably less than 15 wt.% of polyunsaturated fatty acid.

It is preferred that the composition according to the invention has a fat blend comprising 35 - 75 wt.% of fat, more preferably 40 - 65 wt.% of fat, and 25 - 65 wt.% non-fat solids, more preferably 35 - 60 wt.% of non-fat solids. This range of fat content is preferred, as it contributes to achieve appropriate viscosity (along with addition of limited amount of emulsifiers) and preferred thickness of coating in frozen confections.

It is furthermore preferred that the fat blend of medium soft fat and liquid oil comprises comprises 50 - 90 wt.% of medium soft fat and 10 - 50 wt.% of liquid fat based on the weight of the total fat blend. More preferably the fat blend comprises 60 - 85 wt.% of medium soft fat, more preferably 75 - 85 wt.% of medium soft fat, and 15 - 40 wt.% of liquid fat, more preferably 15 - 25 wt.% of liquid fat based on the weight of the total fat blend.
It has been found that the fat blends according to the invention at a temperature of -15°C, displays a solid fat content of 40 - 60% within 2 min. of crystallization, The medium soft fat is selected from the group consisting of: palm oil medium soft fractions including soft stearins and mid fractions, shea, cocoa butter, cocoa butter equivalents, cocoa butter replacers, or a combination thereof.
In a preferred embodiment of the invention, the medium soft fat is medium soft palm mid fraction comprising below 58 %, preferably below 54 % of saturated fatty acid, C16 fatty acids which amount between 40 - 50 % of the total fatty acids of the medium soft fat, and having a solid fat content at a temperature of 20°C of 35 - 50 %, preferably between 40-45 %. The moderate amount of SFA present in the medium soft fats provides sufficient solid fat content for crystallization of the compound coating. This in turn gives a mechanical resistance to the coatings during further processing (for e.g. wrapping and transportation).
In a particular preferred embodiment of the invention the medium soft fat in the coating composition is a medium soft palm mid fraction comprising: a) below 54 % of saturated fatty acid; b) C16 fatty acids which amount to 40-50% of the total fatty acids of the medium soft fat; and which medium soft palm mid fraction displays above 35 %, preferably between 40-50 %, of solid fat content at 20°C, using method as explained in the examples below; d) a melting point between 28-32°C, and e) having an iodine value (IV) between 39-48.

Palm mid fractions are commercially available fat suppliers e.g. Cargill, AAK and Wilmar. The liquid oil may advantageously be selected from the group consisting of: sunflower oil, safflower oil, soybean oil, rapeseed oil, canola oil, algal oil, palm oil, peanut oil, olive oil, macademia nut oil, moringa oleifera seed oil, hazelnut oil, avocado oil or a combination thereof. Preferably the liquid oil is selected from the group consisting of high oleic sunflower oil, high stearic high oleic sunflower oil, high olic safflower oil, high oleic soybean oil, high oleic rapeseed oil, high oleic canola oil, high oleic algal oil, high oleic palm oil, high oleic peanut oil, olive oil, macademia nut oil, moringa oleifera seed oil, hazelnut oil, avocado oil or a combination thereof.

In a particular preferred embodiment of the invention the liquid oil is high oleic sunflower oil, high oleic soybean or high oleic rapeseed oil such as high oleic canola oil comprising above 70 %, preferably above 80% of monounsaturated fatty acid, below 10%, preferably below 5% of polyunsaturated fatty acid, in the liquid oil, displaying below 5% of solid fat content at 0°C, and wherein the unsaturated fatty acid contains 16C-atoms or more than 16C-atoms.
The coating composition according to the invention comprises 25 - 65 wt. % non-fat solids. The non-fat solids are selected from the group consisting of: sugar, fibres, cocoa powder, milk powder, emulsifier and one or more flavours. The non-fat solids provide structure, flavour and colour to the coating.
In the present context the fat phase includes the fat in cocoa powder and milk powders. The fat in these powder are calculated in to the amounts of fat in the coating composition.

In a preferred embodiment of the invention the composition comprises 35 - 75 wt. % fat comprising a blend of 17.5 - 67.5 wt. % medium soft fat and 3.5 - 37.5 wt. % liquid oil, 20 - 40 wt. % sugar, 0 - 20 wt. % cocoa powder, and 0 - 20 wt. % of non-fat milk solids.

According to the present invention, the composition may comprise 0.1 - 2 wt. % of emulsifiers selected from sunflower lecithin, soya lecithin, polyglycerol polyricinoleate (PGPR; E476), ammonium phosphatide (YN; E442) or a combination thereof.

For chocolate flavoured coating the amounts of cocoa solids with e.g. 11% fat in the coating composition is below 20 wt. %, preferably from 0 - 15 wt. %, more preferably from 10 - 20 wt. %. For milk chocolate flavoured coating it is preferred that the amount of no-fat milk solids for milk chocolate is below 20 wt. %, preferably from 0 - 12 wt. %. To obtain other coatings no cocoa powder might be included at all.

A composition according to the invention may further comprise a structuring agent in an amount sufficient to provide strength and faster crystallization kinetic properties to the coating. The structuring agent may be agent can be a monoacylglycerols, monoacylglycerol ester, diacylglycerols, sorbitan fatty acid ester, waxes, behenic acid, palm stearin or a combination thereof.

It is preferred that the structuring agent is present in an amount of between about 0.2% and 3% by weight of the coating.

In particular preferred composition according to the invention, the coatings developed comprises a palm oil fraction, low SFA liquid oil and optionally, a structuring agent.

Solids are preferably fillers such as fillers selected from the group selected from the group consisting of: sugar, fibers, cocoa powder, milk powder, emulsifier and one or more flavours.

The composition according to the present invention may be combined with known techniques to reduce the fat and SFA (saturated fatty acid) content of chocolate containing coating:
Fat and sugars are homogenously mixed within the composition for coating a frozen confection. Solidification step of said composition is related to the crystallization of fat phase. Crystallization of fat phase will be influenced by the presence of other molecules, and any modification in the composition may have an influence on this crystallization/solidification step. Texture (snap or brittleness) of the coating of a frozen confection may be considered as a driver for consumer preference, therefore it is important to maintain this characteristic.

Advantageously the coating composition comprises 35 - 75 wt. % fat, the fat component comprising a blend of 60 - 85 wt.% of medium soft fat, more preferably 75 - 85 wt.% of medium soft fat, and 15 - 40 wt.% of liquid fat, more preferably 15 - 25 wt.% of liquid fat based on the weight of the total fat blend, 20 - 40 wt. % sugar, 0 - 20 wt. % cocoa powder, and 0 - 20 wt. % of non-fat milk solids..

In one particular preferred embodiment of the invention, the liquid oil is sunflower oil or rapeseed oil. These oils are particularly suitable in the scope of the present invention because they have a low SFA content, no off flavour when fresh and are reasonably priced.

Furthermore, the composition according to the present invention may in a preferred embodiment comprise from 0 - 20 wt. % non-fat milk solids in a milk containing coating. Below 1% non-fat milk solids, the colour, flavour and texture of the composition is not satisfactory from a sensory point of view. Above 20% non-fat milk solids, no additional benefit is achieved. For dark coating milk component may not be present.

In another embodiment the invention relates to a process for producing a coating composition according to any of the preceding claims, wherein said process comprising the steps: providing the non-fat solids, the medium-soft fat and the liquid oil, melting the medium-soft fat, mixing non-fat solids with at least part of the melted medium-soft fat and obtaining a mixture of medium-soft fat and non-fat solids, refining the mixture of medium-soft fat and non-fat solids by milling to reduce the particle, preferably to a particle size to below 40 microns, adding the liquid oil to the refined mixture and optionally adding emulsifier to the refined mixture and/or the mixture with the liquid oil.

In an alternative process of the invention the non-fat solids can be pre-milled in a separate process-step (e.g. by the use of air-classifier mills). The pre-milling step can then fully or partly replace the refining of the mixture of medium-soft fat and non-fat solids by milling to reduce the particle.

In a further embodiment the invention relates process for producing an at least partly coated frozen confection, the process comprising providing a coating composition as described herein according to the invention and coating a frozen composition.

The invention also relates to a frozen confection at least partly coated with a composition of the invention.

Preferably, the frozen confection according to the present invention may have a coating thickness from 0.5 - 5 mm.

Furthermore, the frozen confection according to the present invention may be ice cream.

### EXAMPLES

By way of example and not limitation, the following examples are illustrative of various embodiments of the present disclosure.

### Fat Analysis:

Fats were analysed with standard methods:
The fatty acid composition was done using Gas Chromatography, IUPAC method 2.304. The fatty acids are expressed as % fatty acids based on fat. For fat blends the fatty acids of each fat was determined and then tabulated mathematically to arrive at the blend composition. The solid fat content was determined using pulsed NMR (Nuclear Magnetic Resonance), Minispec mq20 NMR Analyzer, Bruker Biospin GMBH (Rheinstetten, Germany) using ISO-8292-1D method, non-tempered and with slight modification in time as mentioned below. Supplier standards for SFC which had solids at 0%, 31.1% and 72.8% solids were used to calibrate the equipment.

Approximately 2g of well melted fat was placed in a 10 mm NMR tube; samples were then pre-treated prior to testing to make sure it is fully melted. The fats were not tempered, heated to 60 °C, and analysed. Samples were held at 30 min at various temperatures (0, 10, 20, 25, 30, 35, 37 and 40°C), and the values at each temperature was read in the NMR. Samples were run in duplicates, and the values were averaged. Isothermal crystallization was carried out at 0 and -15 C. Samples were left in the water bath at these temperatures and solid fat content was recorded manually using the NMR at defined intervals.

### Example 1.

The fats chosen were a hard palm fractions, and the medium soft fraction of the current invention. The properties of the two palm fats chosen are given below, Table 1

**Table 1. Characteristics of Palm fat chosen for making fat blends with liquid oil**

| Fat type | Slip Melting point (°C) | Iodine Value | Solid fat content (%) |
|---|---|---|---|
| Palm fraction - hard | 34-36°C | 33-36 | 0°C - 95 |
| | | | 10°C - 92 |
| | | | 20°C - 86 |
| | | | 25°C - 74 |
| | | | 30°C - 46 |
| | | | 35°C - 5 |
| Palm fraction - medium soft | 29-31°C | 44-46 | 0°C - 80.8 |
| | | | 10°C - 73.6 |
| | | | 20°C - 43.1 |
| | | | 25°C - 20.3 |
| | | | 30°C - 5.4 |
| | | | 35°C - <1 |

Blends including the palm fraction were made with liquid oil, sunflower or canola or the high oleic versions of the oils, the compositions of which are given in Table 2

**Table 2. Fat blends used for making ice cream coatings.**

| Fat blend | Proportion of fats | SFA content (% fat) |
|---|---|---|
| A | Palm fraction, hard (77%) + rapeseed (canola) oil (23%) | 50 |
| B | Palm fraction, hard (60%) + high oleic sunflower oil (40%) | 40 |
| C | Palm fraction, medium soft (80%) + high oleic canola oil (20%) | 42.5 |

### Coating preparation:

Ice cream coatings were made using the 3 fat blends as above, the coating formulation is given in Table 3. Coatings A and A1 use the same fat blend A and have a fat content of 50% and 60% respectively; coatings B and B1 have fat blend B at 50 and 60% fat respectively; coatings C and C1 have fat blend C, at 50 and 60% fat respectively. All coatings were made in the kitchen using a ball-mill, the particle size was maintained at approximately 30 microns.

**Table 3. Coating Formulations using fat blends from Table 2.**

| | Coating A, 50% fat with fat A | Coating 60% fat with fat A | Coating B, 50% fat with fat B | Coating B1, 60% fat with fat B | Coating C, 50% fat, with fat C | Coating C1, 60% fat with fat C |
|---|---|---|---|---|---|---|
| Fat | 49 | 59.2 | 49 | 59.2 | 49 | 59.2 |
| Sugar | 35 | 28.0 | 35 | 28 | 35 | 28 |
| Cocoa Powder (11% fat) | 4 | 3.2 | 4 | 3.2 | 4 | 3.2 |
| Skimmed Milk Powder | 11.5 | 9.2 | 11.5 | 9.2 | 11.5 | 9.2 |
| Sunflower Lecithin | 0.3 | 0.24 | 0.3 | 0.24 | 0.3 | 0.3 |
| Other (flavor) | 0.2 | 0.16 | 0.2 | 0.2 | 0.2 | 0.2 |

### Dipping studies:

Uncoated ice cream stick bars were obtained from the factory and stored at -30°C. The coating were taken in a jacketed beaker and maintained at respective temperatures, the 50% fat coatings, A and C were maintained at 44°C and the 60% fat coatings, A1 and C1 were maintained at 40°C. Ten ice cream bars were dipped in each of the coatings. The coating pick-up weight was calculated and the number of bleeders noted. As can be seen there were more bleeders when using the formulation A versus the C, formulation B tried at an earlier date also showed several bleeders. The blend with the harder fat has a higher heat of crystallization that melts the ice cream surface and in addition the shrinking of fat when setting aggravates the bleeders.

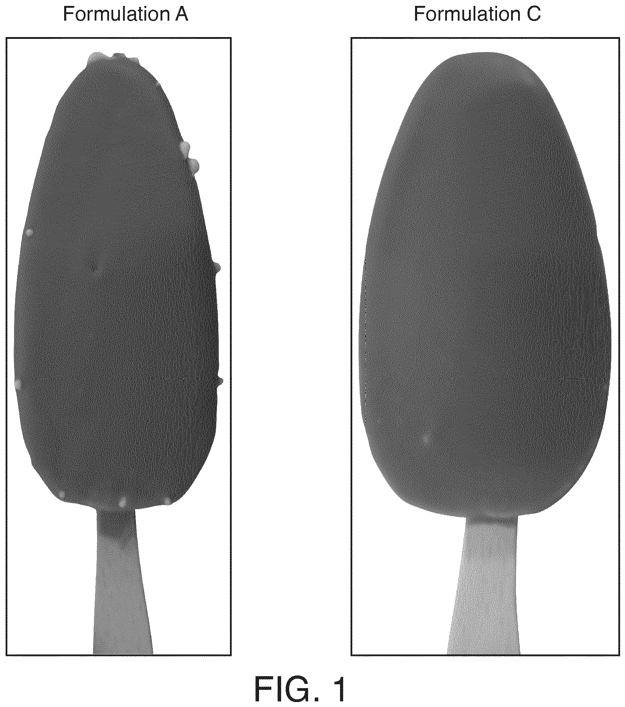

Table 4 below gives the coating weight pick-up and the bleeders observed in the coatings, average of 10 measurements. Figure 1 shows the bleeding in dip coated ice cream bars for formulation A and formulation C.

**Table 4. Coating weight pick-up and bleeders in ice cream bars coated with formulation A and C**

| Coatings used | Coating weight (g) | #bleeders |
|---|---|---|
| 50% fat Formulation A | 16 | 6.7 |
| 50% fat Formulation C | 15.9 | 3 |
| 60% fat Formulation A | 10.3 | 6.1 |
| 60% fat Formulation C | 10.7 | 2.9 |

From table 4, it can be clearly seen that the use of the harder palm fraction caused more bleeders in comparison to the blend containing the medium soft palm fraction. The lowered instances of bleeders are of particular advantage for performance on the line. The cause of the bleeding in coated ice cream is due to several factors, one such being related to the packing and heat of crystallization of the fat. The fast crystallizing hard fraction liberates heat (exothermic) and contracts; the liberated heat melts the ice cream surface and the fat contraction causes cracks through which the ice cream oozes out thereby causing the bleeding.

Table 5 below gives the cooling curve data of the fats and the coatings. As can be seen the fat blend A and the coating A both start crystallization at a higher temperature compared to the fat blend B and coating B. In addition the heat of crystallization for the fat blend A is higher than the fat blend B (-61.4 versus -47.8 J/g). This is also shown in the coating, -33.8 J/g for coating A versus -25.3 J/g for coating B.

**Table 5. Cooling Curves - Differential Scanning Calorimetry (DSC) data of the fats and coatings.**

| | start of crystallization | end of crystallization | total heat of crystallization |
|---|---|---|---|
| Fat blend A | 16.51 | -1.97 | -61.41 |
| Coating A | 17.81 | -3.75 | -33.8 |
| Fat blend C | 14.45 | -7.85 | -47.81 |
| Coating C | 14.90 | -7.18 | -25.28 |

The approach here was to use a fat fraction which is softer or medium soft and blend it with lesser amount of liquid oil to reach lower SFA levels. The medium soft fractions do not crystallize as rapidly as the harder fractions, contract to a lesser extent and have a lower heat of crystallization, this would make them more effective against causing bleeding effect. In addition the lowered ratio of liquid oil and the slower crystallization would allow for better holding of the liquid oil. However use of these medium soft fractions and liquid oils could cause issues such as setting of the coating and loss of snap however, surprisingly according to the present invention it has been seen that the coatings made with medium soft palm fraction and liquid oils do set on the line and also these coatings maintain the initial snap on biting and have been found to be acceptable by sensory panel.

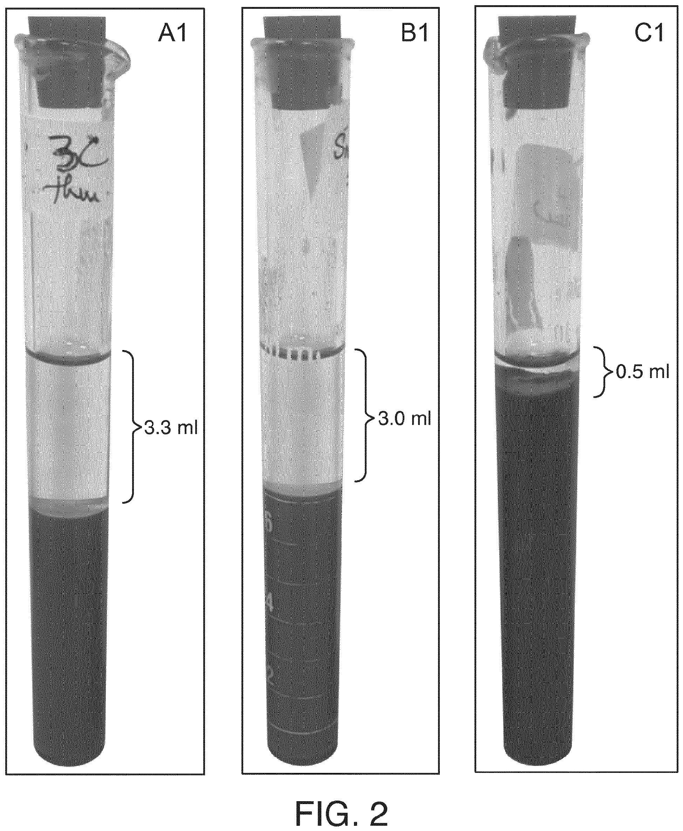

To get the same level of SFA in the blend, more liquid oil needs to be added to the harder palm fraction as compared to the medium soft palm fraction. While the hard palm fraction can hold liquid oil when co-crystallized together, there appears to be a limit on how much of the liquid oil it can hold when being crystallized at a fast rate as when applied on an ice cream. This makes an impact on the sensory property of the coated bar especially with respect to oily mouthfeel. This is further exaggerated when the fat content of the coating is higher than 60% fat. The oiling out characteristics of the coating has also been demonstrated on the bench. 10 ml of coatings with 60% fat made with formulations A1, B1 and C1 (Table 3) were taken in a measuring jar and left in the oven at 34°C for a week and the oil separation was measured. The oil separation in coatings A1 and B1, which use the palm hard fraction and liquid oil was 33% and 30% respectively; while it was only 5% in coating C1 that uses a combination of medium soft palm fraction and liquid oil (see Figure 2 showing the oil separation). The coating was held at 34°C in an air oven for 1 week. This separation of oil is also manifested in the coated ice cream product giving an oily mouthfeel.

Thus by a careful selection of medium soft palm fraction and liquid oil it has been found to be possible to eliminated process and sensory issues associated with fats used in previous patent application EP2367441, the advantages being less cracking and bleeding on the process line and also loss of the negatively perceived oily mouthfeel that was particularly exaggerated in higher fat (60% and above) coatings.

## Claims

1. A frozen confection coating composition, the composition comprising,
expressed in weight % based on the total weight of the coating,
35 - 75 wt.% of non-interesterified fat, preferably 40-65 wt.% of non-interesterified fat which comprises a fat blend of medium soft fat and liquid oil, and
25 - 65 wt.% of non-fat solids, preferably 35-60 wt.% of non-fat solids,
wherein, the coating composition comprises,
less than 30 wt.% of saturated fatty acids
9-50 wt.%, preferably 15-30 wt.% of monounsaturated fatty acid and less than 30 wt.%, preferably less than 15 wt.% of polyunsaturated fatty acid, and
wherein the medium soft fat has 35-50 %, preferably 40-45 % of solid fat at 20°C, and the medium soft fat has less than 55 wt. % saturated fatty acids,and wherein the liquid oil is liquid at 20°C and contains less than 5% of solid fat content at 0°C and
wherein the medium soft fat is selected from the group consisting of: palm oil medium soft fractions including soft stearins and mid fractions, shea, cocoa butter, cocoa butter equivalents, cocoa butter replacers, or a combination thereof; and
wherein the non-fat solids are selected from the group consisting of: sugar, fibres, cocoa powder, milk powder, emulsifier and one or more flavours.

2. A composition according to claim 1, wherein the fat blend of medium soft fat and liquid oil comprises 50 - 90 wt. % of medium soft fat and 10 - 50 wt. % of liquid fat based on the weight of the total fat blend.

3. A composition according to claim 1 and 2, wherein the fat blend has fatty acids based on the total fat in the coating of 22-45 wt. % palmitic acid
2-6 wt. % stearic acid
28-58 wt. % oleic acid and
6-35 wt. % linoleic acid.

4. A composition according to claims 1 to 3, wherein the fat blend of medium soft fat and liquid oil comprises 60 - 85 wt.% of medium soft fat, more preferably 75 - 85 wt.% of medium soft fat, and 15 - 40 wt.% of liquid fat, more preferably 15 - 25 wt.% of liquid fat based on the weight of the total fat blend.

5. A composition according to any of the preceding claims, wherein the composition further comprise a structuring agent in an amount sufficient to provide strength and faster crystallization kinetic properties to the coating, wherein the structuring agent can be a monoacylglycerol, diacylglycerol, monoacylglycerol ester, sorbitan fatty acid ester, waxes, behenic acid, palm stearin, or a combination thereof.

6. A composition according to claim 5, wherein the structuring agent is present in an amount of between about 0.2 % and 3 % by weight of the coating.

7. A coating composition according to any of the preceding claims, wherein the fat blend at a temperature of -15°C, displays a solid fat content of 40 - 60 % within 2 min. of crystallization.

8. A coating composition according to any of the preceding claims, wherein the medium soft fat is a medium soft palm mid fraction comprising
a) below 54 % of saturated fatty acid, and
b) C16 fatty acids which amount to 40-50% of the total fatty acids of the medium soft fat,
which medium soft palm fraction displays between 35 - 50 %, preferably between 40-50 %, of solid fat content at 20°C, a melting point between 28-32°C, and having an iodine value (IV) between 39-48.

9. A composition according to any of the preceding claims, wherein the liquid oil is selected from the group consisting of: sunflower oil, safflower oil, soybean oil, rapeseed oil such as canola oil, algal oil, palm oil, peanut oil, olive oil, macademia nut oil, moringa oleifera seed oil, hazelnut oil, avocado oil or a combination thereof.

10. A composition according to claim 8, wherein the liquid oil is selected from the group consisting of: high oleic sunflower oil, high stearic high oleic sunflower oil, high oleic safflower oil, high oleic soybean oil, high oleic rapeseed oil such as high oleic canola oil, high oleic algal oil, high oleic palm oil, high oleic peanut oil or a combination thereof.

11. A coating composition according to claims 9 and 10, wherein the liquid oil is high oleic sunflower oil or high oleic soybean comprising
a) above 70 %, preferably above 80 % of monounsaturated fatty acid
b) below 10 %, preferably below 5 % of polyunsaturated fatty acid
c) displays below 5 % of solid fat content at 0°C,
wherein the unsaturated fatty acid contains 16 C-atoms or more than 16 C-atoms.

12. A composition according to any of the preceding claims, wherein the composition comprises 0.1 - 2 wt.% of emulsifiers selected from sunflower lecithin, soya lecithin, polyglycerol polyricinoleate (PGPR; E476), ammonium phosphatide (YN; E442) or a combination thereof.

13. A composition according to any of the preceding claims, wherein comprising
35 - 75 wt. % fat comprising a blend of
17.5-67.5 wt. % medium soft fat and
3.5-37.5 wt. % liquid oil,
20-40 wt. % sugar,
0-20 wt. % cocoa powder, and
0 - 20 wt. % of non-fat milk solids.

14. A process for manufacturing a coating composition according to any of the preceding claims, wherein said process comprising the steps:
- providing the non-fat solids, the medium soft fat and the liquid oil,
- melting the medium soft fat,
- mixing non-fat solids with the at least part of the melted medium soft fat and obtaining a mixture of medium soft fat and non-fat solids,
- refining the mixture of medium soft fat and non-fat solids by milling to reduce the particles, preferably to a particle size to below 40 microns,
- adding the liquid oil to the refined mixture and
- optionally adding emulsifier to the refined mixture and/or the mixture with the liquid oil.

15. A process for producing an at least partly coated frozen confection, the process comprising providing a coating composition according to claims 1 to 13 and coating a frozen composition.

16. A frozen confection at least partly coated with a composition according to any of claims 1 to 13.

## Patentansprüche

1. Eiskonfektbeschichtungszusammensetzung, wobei die Zusammensetzung, ausgedrückt in Gew.-%, bezogen auf das Gesamtgewicht der Beschichtung, umfasst:
zu 35 - 75 Gew.-% nicht umgeestertes Fett, vorzugsweise zu 40-65 Gew.-% nicht umgeestertes Fett, das eine Fettmischung aus mittelweichem Fett und flüssigem Öl umfasst, und
zu 25 - 65 Gew.-% fettfreie Feststoffe, vorzugsweise zu 35-60 Gew.-% fettfreie Feststoffe,
wobei die Beschichtungszusammensetzung umfasst
zu weniger als 30 Gew.-% gesättigte Fettsäuren
zu 9-50 Gew.-%, vorzugsweise zu 15-30 Gew.-% einfach ungesättigte Fettsäure und zu weniger als 30 Gew.-%, vorzugsweise zu weniger als 15 Gew.-% mehrfach ungesättigte Fettsäure, und
wobei das mittelweiche Fett bei 20 °C zu 35-50 %, vorzugsweise zu 40-45 % festes Fett aufweist
und wobei das mittelweiche Fett zu weniger als 55 Gew.-% gesättigte Fettsäuren aufweist und
wobei das flüssige Öl bei 20 °C flüssig ist und bei 0 °C zu weniger als 5 % festes Fett enthält und
wobei das mittelweiche Fett ausgewählt ist aus der Gruppe bestehend aus: mittelweichen Palmölfraktionen einschließlich weicher Stearine und Mittelfraktionen, Shea, Kakaobutter, Kakaobutteräquivalenten, Kakaobutterersatzstoffen oder einer Kombination davon; und
wobei die fettfreien Feststoffe ausgewählt sind aus der Gruppe bestehend aus: Zucker, Fasern, Kakaopulver, Milchpulver, Emulgator und einem oder mehreren Aromen.

2. Zusammensetzung nach Anspruch 1, wobei die Fettmischung aus mittelweichem Fett und flüssigem Öl zu 50 - 90 Gew.-% mittelweiches Fett und zu 10 -50 Gew.-% flüssiges Fett, bezogen auf das Gewicht der gesamten Fettmischung, umfasst.

3. Zusammensetzung nach Anspruch 1 und 2, wobei die Fettmischung Fettsäuren, basierend auf dem Gesamtfett in der Beschichtung, zu 22-45 Gew.-% Palmitinsäure, zu 2-6 Gew.-% Stearinsäure, zu 28-58 Gew.-% Ölsäure und zu 6-35 Gew.-% Linolsäure aufweist.

4. Zusammensetzung nach Anspruch 1 bis 3, wobei die Fettmischung aus mittelweichem Fett und flüssigem Öl zu 60 - 85 Gew.-% mittelweiches Fett, mehr bevorzugt zu 75 - 85 Gew.-% mittelweiches Fett und zu 15 - 40 Gew.-% flüssiges Fett, mehr bevorzugt zu 15 - 25 Gew.-% flüssiges Fett, bezogen auf das Gewicht der gesamten Fettmischung, umfasst.

5. Zusammensetzung nach einem der vorstehenden Ansprüche, wobei die Zusammensetzung ferner einen Strukturbildner in einer ausreichenden Menge umfasst, um der Beschichtung Festigkeit und schnellere kristallisationskinetische Eigenschaften zu verleihen, wobei der Strukturbildner ein Monoacylglycerin, Diacylglycerin, Monoacylglycerinester, Sorbitanfettsäureester, Wachse, Behensäure, Palmstearin oder eine Kombination davon sein kann.

6. Zusammensetzung nach Anspruch 5, wobei der Strukturbildner in einer Menge von zwischen ungefähr 0,2 Gew.-% und 3 Gew.-% der Beschichtung vorhanden ist.

7. Beschichtungszusammensetzung nach einem der vorstehenden Ansprüche, wobei die Fettmischung bei einer Temperatur von -15 °C einen Festfettgehalt von 40 - 60 Gew.-% innerhalb von 2 Min. Kristallisation aufweist.

8. Beschichtungszusammensetzung nach einem der vorstehenden Ansprüche, wobei das mittelweiche Fett eine mittelweiche Palm-Mittelfraktion ist, umfassend
a) zu weniger als 54 % gesättigte Fettsäure und
b) C16-Fettsäuren, die 40-50 % der gesamten Fettsäuren des mittelweichen Fetts ausmachen, und
wobei die mittelweiche Palmfraktion bei 20 °C einen Festfettgehalt zwischen 35 - 50 %, vorzugsweise zwischen 40-50 %, einen Schmelzpunkt zwischen 28-32 °C und einen Jodwert (IV) zwischen 39-48 aufweist.

9. Zusammensetzung nach einem der vorstehenden Ansprüche, wobei das flüssige Öl ausgewählt ist aus der Gruppe bestehend aus: Sonnenblumenöl, Distelöl, Sojaöl, Rapsöl wie Canolaöl, Algenöl, Palmöl, Erdnussöl, Olivenöl, Macademia-Nussöl, Moringa-Oleifera-Samenöl, Haselnussöl, Avocadoöl oder einer Kombination davon.

10. Zusammensetzung nach Anspruch 8, wobei das flüssige Öl ausgewählt ist aus der Gruppe bestehend aus: Sonnenblumenöl mit hohem Ölsäuregehalt, Sonnenblumenöl mit hohem Stearinsäuregehalt und hohem Ölsäuregehalt, Distelöl mit hohem Ölsäuregehalt, Sojaöl mit hohem Ölsäuregehalt, Rapsöl mit hohem Ölsäuregehalt wie Canolaöl mit hohem Ölsäuregehalt, Algenöl mit hohem Ölsäuregehalt, Palmöl mit hohem Ölsäuregehalt, Erdnussöl mit hohem Ölsäuregehalt oder einer Kombination davon.

11. Beschichtungszusammensetzung nach Anspruch 9 und 10, wobei das flüssige Öl Sonnenblumenöl mit hohem Ölsäuregehalt oder Sojaöl mit hohem Ölsäuregehalt ist, umfassend
a) zu über 70 %, vorzugsweise zu über 80 % einfach ungesättigte Fettsäure
b) zu unter 10 %, vorzugsweise zu unter 5 % mehrfach ungesättigte Fettsäure
c) bei 0 °C einen Festfettgehalt von unter 5 % aufweist,
wobei die ungesättigte Fettsäure 16 C-Atome oder mehr als 16 C-Atome enthält.

12. Zusammensetzung nach einem der vorstehenden Ansprüche, wobei die Zusammensetzung zu 0,1 - 2 Gew.-% Emulgatoren umfasst, ausgewählt aus Sonnenblumenlecithin, Sojalecithin, Polyglycerinpolyricinoleat (PGPR; E476), Ammoniumphosphatid (YN; E442) oder einer Kombination davon.

13. Zusammensetzung nach einem der vorstehenden Ansprüche, wobei die Zusammensetzung zu 35 - 75 Gew.-% Fett umfasst, umfassend eine Mischung aus zu 17,5 - 67,5 Gew.-% mittelweichem Fett und zu 3,5 - 37,5 Gew.-% flüssigem Öl, zu 20 - 40 Gew.-% Zucker, zu 0 - 20 Gew.-% Kakaopulver und zu 0 - 20 Gew.-% fettfreien Milchfeststoffen.

14. Verfahren zum Herstellen einer Beschichtungszusammensetzung nach einem der vorstehenden Ansprüche, wobei das Verfahren folgende Schritte umfasst:
- das Bereitstellen der fettfreien Feststoffe, des mittelweichen Fetts und des flüssigen Öls,
- das Schmelzen des mittelweichen Fetts,
- das Mischen von fettfreien Feststoffen mit mindestens einem Teil des geschmolzenen mittelweichen Fetts und das Erhalten einer Mischung aus mittelweichem Fett und fettfreien Feststoffen,
- das Verfeinern der Mischung aus mittelweichem Fett und fettfreien Feststoffen durch Mahlen zum Verkleinern der Teilchen vorzugsweise auf eine Teilchengröße von unter 40 Mikrometern,
- das Zugeben des flüssigen Öls zu der verfeinerten Mischung und
- wahlweise das Zugeben von Emulgator zu der verfeinerten Mischung und/oder der Mischung mit dem flüssigen Öl.

15. Verfahren zum Herstellen eines mindestens teilweise beschichteten Eiskonfekts, wobei das Verfahren das Bereitstellen einer Beschichtungszusammensetzung nach Anspruch 1 bis 13 und das Beschichten einer gefrorenen Zusammensetzung umfasst.

16. Eiskonfekt, das mindestens teilweise mit einer Zusammensetzung nach einem der Ansprüche 1 bis 13 beschichtet ist.

## Revendications

1. Composition d'enrobage de confiserie congelée, la composition comprenant, exprimé en % en poids sur la base du poids total de l'enrobage,
35 à 75 % en poids de matière grasse non interestérifiée, de préférence 40 à 65 % en poids de matière grasse non interestérifiée qui comprend un mélange de matières grasses de matière grasse semi-molle et d'huile liquide, et
25 à 65 % en poids de matières solides exemptes de matières grasses, de préférence 35 à 60 % en poids de matières solides exemptes de matières grasses,
dans laquelle, la composition d'enrobage comprend,
moins de 30 % en poids d'acides gras saturés
9 à 50 % en poids, de préférence 15 à 30 % en poids d'acide gras mono-insaturé et moins de 30 % en poids, de préférence moins de 15 % en poids d'acide gras polyinsaturé, et
dans laquelle la matière grasse semi-molle a 35 à 50 %, de préférence 40 à 45 % de matière grasse solide
à 20 °C, et la matière grasse semi-molle a moins de 55 % en poids d'acides gras saturés, et
dans laquelle l'huile liquide est liquide à 20 °C et contient moins de 5 % de teneur en matières grasses solides à 0 °C et
dans laquelle la matière grasse semi-molle est choisie dans le groupe constitué de : fractions semi-molles d'huile de palme incluant des stéarines molles et des fractions moyennes, du karité, du beurre de cacao, des équivalents de beurre de cacao, des succédanés de beurre de cacao, ou une combinaison de ceux-ci ; et
dans laquelle les matières solides exemptes de matières grasses sont choisies dans le groupe constitué de : sucre, fibres, poudre de cacao, lait en poudre, émulsifiant et un ou plusieurs arômes.

2. Composition selon la revendication 1, dans laquelle le mélange de matières grasses de matière grasse semi-molle et d'huile liquide comprend 50 à 90 % en poids de matière grasse semi-molle et 10 à 50 % en poids de matière grasse liquide sur la base du poids du mélange total de matières grasses.

3. Composition selon la revendication 1 et 2, dans laquelle le mélange de matières grasses a des acides gras sur la base de la matière grasse totale dans l'enrobage de 22 à 45 % en poids d'acide palmitique 2 à 6 % en poids d'acide stéarique 28 à 58 % en poids d'acide oléique et 6 à 35 % en poids d'acide linoléique.

4. Composition selon les revendications 1 à 3, dans laquelle le mélange de matières grasses de matière grasse semi-molle et d'huile liquide comprend 60 à 85 % en poids de matière grasse semi-molle, plus préférablement 75 à 85 % en poids de matière grasse semi-molle, et 15 à 40 % en poids de matière grasse liquide, plus préférablement 15 à 25 % en poids de matière grasse liquide sur la base du poids du mélange total de matières grasses.

5. Composition selon l'une quelconque des revendications précédentes, dans laquelle la composition comprend en outre un agent structurant en une quantité suffisante pour fournir des propriétés de résistance et de cinétique de cristallisation plus rapide à l'enrobage, dans laquelle l'agent structurant peut être un monoacylglycérol, un diacylglycérol, un ester de monoacylglycérol, un ester d'acide gras de sorbitan, des cires, de l'acide béhénique, de la stéarine de palme, ou une combinaison de ceux-ci.

6. Composition selon la revendication 5, dans laquelle l'agent structurant est présent en une quantité comprise entre environ 0,2 % et 3 % en poids de l'enrobage.

7. Composition d'enrobage selon l'une quelconque des revendications précédentes, dans laquelle le mélange de matières grasses à une température de -15 °C, présente une teneur en matières grasses solides de 40 à 60 % dans les 2 min suivant la cristallisation.

8. Composition d'enrobage selon l'une quelconque des revendications précédentes, dans laquelle la matière grasse semi-molle est une fraction moyenne de palme semi-molle comprenant
a) moins de 54 % d'acide gras saturé, et
b) des acides gras en C16 qui représentent 40 à 50 % des acides gras totaux de la matière grasse semi-molle,
laquelle fraction de palme semi-molle présente entre 35 et 50 %, de préférence entre 40 et 50 %, de teneur en matières grasses solides à 20 °C, un point de fusion entre 28 et 32 °C, et ayant un indice d'iode (IV) entre 39 et 48.

9. Composition selon l'une quelconque des revendications précédentes, dans laquelle l'huile liquide est choisie dans le groupe constitué de : huile de tournesol, huile de carthame, huile de soja, huile de colza telle que l'huile de canola, huile algale, huile de palme, huile d'arachide, huile d'olive, huile de noix de macadamia, huile de graines de moringa oleifera, huile de noisette, huile d'avocat ou une combinaison de celles-ci.

10. Composition selon la revendication 8, dans laquelle l'huile liquide est choisie dans le groupe constitué de : huile de tournesol à haute teneur en acide oléique, huile de tournesol à haute teneur en acide stéarique et haute teneur en acide oléique, huile de carthame à haute teneur en acide oléique, huile de soja à haute teneur en acide oléique, huile de colza à haute teneur en acide oléique telle que l'huile de canola à haute teneur en acide oléique, huile algale à haute teneur en acide oléique, huile de palme à haute teneur en acide oléique, huile d'arachide à haute teneur en acide oléique ou une combinaison de celles-ci.

11. Composition d'enrobage selon les revendications 9 et 10, dans laquelle l'huile liquide est de l'huile de tournesol à haute teneur en acide oléique ou de soja à haute teneur en acide oléique comprenant
a) plus de 70 %, de préférence plus de 80 % d'acide gras mono-insaturé
b) moins de 10 %, de préférence moins de 5 % d'acide gras polyinsaturé
c) présente moins de 5 % de teneur en matières grasses solides à 0 °C,
dans laquelle l'acide gras insaturé contient 16 atomes de C ou plus de 16 atomes de C.

12. Composition selon l'une quelconque des revendications précédentes, dans laquelle la composition comprend 0,1 à 2 % en poids d'émulsifiants choisis parmi lécithine de tournesol, lécithine de soja, polyricinoléate de polyglycérol (PGPR ; E476), phosphatide d'ammonium (YN ; E442) ou une combinaison de ceux-ci.

13. Composition selon l'une quelconque des revendications précédentes, dans laquelle elle comprend 35 à 75 % en poids de matière grasse comprenant un mélange de 17,5 à 67,5 % en poids de matière grasse semi-molle et 3,5 à 37,5 % en poids d'huile liquide, 20 à 40 % en poids de sucre, 0 à 20 % en poids de poudre de cacao et 0 à 20 % en poids de solides de lait sans matières grasses.

14. Procédé de fabrication d'une composition d'enrobage selon l'une quelconque des revendications précédentes, dans lequel ledit procédé comprend les étapes :
- fourniture des matières solides exemptes de matières grasses, de la matière grasse semi-molle et de l'huile liquide,
- fusion de la matière grasse semi-molle,
- mélange des matières solides exemptes de matières grasses avec l'au moins une partie de la matière grasse semi-molle fondue et obtention d'un mélange de matière grasse semi-molle et de matières solides exemptes de matières grasses,
- raffinage du mélange de matière grasse semi-molle et de matières solides exemptes de matières grasses par broyage pour réduire les particules, de préférence jusqu'à une taille de particules inférieure à 40 micromètres,
- ajout de l'huile liquide au mélange raffiné et
- éventuellement ajout d'émulsifiant au mélange raffiné et/ou au mélange avec l'huile liquide.

15. Procédé de production d'une confiserie congelée au moins partiellement enrobée, le procédé comprenant la fourniture d'une composition d'enrobage selon les revendications 1 à 13 et l'enrobage d'une composition congelée.

16. Confiserie congelée au moins partiellement enrobée avec une composition selon l'une quelconque des revendications 1 à 13.
